# EUROPÄISCHE PATENTANMELDUNG

(11) **EP 2 890 056 A1**
(43) Veröffentlichungstag der Anmeldung: **01.07.2015**
(21) Anmeldenummer: 13199711.6
(22) Anmeldetag: 27.12.2013
(51) Int. Cl.: H04L 12/28

(54) **Unterstützung von Nutzern in einer intelligenten häuslichen Umgebung**

(71) Anmelder: Deutsche Telekom AG, 53113 Bonn (DE)
(72) Erfinder: Glass, Gregor, 12203 Berlin (DE); Kraft, Andreas, 14129 Berlin (DE); Helmut, Vivien, 12309 Berlin (DE); Schmidt, Aubrey-Derrick, 10439 Berlin (DE); Gerneth, Marlene, 16341 Panketal (DE)
(74) Vertreter: Brandt & Nern Patentanwälte

(57) **Zusammenfassung**

Die vorgeschlagene Lösung bezieht sich auf eine intelligente häusliche Umgebung (Smart Home), in welcher mehrere Komponenten über eine zentrale Instanz miteinander zu einem System verknüpft ist. Grundgedanke der Erfindung ist es, vorzugsweise eine Vielzahl unterschiedlicher Informationsquellen zur Situationserkennung zu nutzen und durch eine auf der Grundlage einer Ontologie erfolgende Vernetzung der von diesen Informationsquellen zur Verfügung gestellten Informationen eine Situationserkennung vorzunehmen sowie schließlich in Abhängigkeit des Ergebnisses der Situationserkennung Komponenten der intelligenten häuslichen Umgebung zu steuern und/oder einen Nutzer dieser Umgebung mit (zusätzlichen) Ausgangsinformationen zu versorgen. Bei den zur Situationserkennung herangezogenen Information handelt es sich um Informationen mindestens einer der Kategorien:
- Zustandsinformationen eines zum System gehörenden Sensors,
- Identifikationsinformationen, die durch einen Identifikator für ein Subjekt oder Objekt des Smart Home bereitgestellt werden,
- Eingangsinformationen über und/oder für mindestens einen Nutzer des Smart Home.

## Beschreibung

Die Erfindung betrifft ein Verfahren und ein System zur Unterstützung von Nutzern in einer intelligenten häuslichen Umgebung - auch als Smart Home bezeichnet. Bei dieser intelligenten häuslichen Umgebung muss es sich nicht zwingend um eine häusliche Umgebung in dem Sinne handeln, dass diese mit dem Zuhause des oder der mittels der vorgestellten Lösung zu unterstützenden Nutzer gleichzusetzen wäre. Vielmehr kann es sich hierbei beispielsweise auch um eine mittels entsprechender Komponenten intelligent gestaltete Büroumgebung oder dergleichen handeln.

In der jüngeren Zeit ist ein Trend zu verzeichnen, elektronische Geräte, welche zunehmend komplexer und mit einer immer größeren Zahl von Funktionen ausgestattet werden, in einer häuslichen Umgebung miteinander zu vernetzen. Dies bezieht sich nicht nur auf Geräte der Unterhaltungselektronik, bei welchen die Vernetzung, beispielsweise im Zuge der Konvergenz zwischen Computer und Fernseher, gewissermaßen eine logische Folge ist. Vielmehr betrifft dies inzwischen eine Vielzahl von Geräten und Einrichtungen in einem Haushalt. Ziel dieses auch mit dem Begriff Smart Home bezeichneten Ansatzes ist es, die Wohn- und Lebensqualität oder aber, mit Bezug auf das Arbeitsumfeld, die Arbeitsbedingungen der Menschen zu verbessern. Ein Teilaspekt ist hierbei zum Beispiel die Hausautomation. So werden beispielsweise moderne Heizungsanlagen oder Jalousieeinrichtungen durch eine dafür zumindest mit entsprechenden Aktoren und häufig außerdem mit Sensoren gekoppelte Steuer- und Verarbeitungseinrichtung tageszeitabhängig und/oder wetterabhängig gesteuert. Ähnliches, mit gegebenenfalls anderen Randbedingungen, gilt für Waschmaschinen und Kühlschränke oder aber auch die bereits erwähnten Geräte der Unterhaltungselektronik. Häufig ist es darüber hinaus dem oder den Nutzern möglich, auf die vorgenannten Einrichtungen und Geräte über das Internet aus der Ferne zuzugreifen. In einer Smart Home Umgebung laufen dabei üblicherweise die Fäden bei einer zentralen Instanz, wie einer vor Ort angeordneten Haussteuereinheit zusammen, welche für die Steuerung und die Verwaltung aller dazu geeigneten Komponenten, das heißt Einrichtungen und Geräte der betreffenden häuslichen Umgebung zuständig ist.

Systeme beziehungsweise Smart Home Umgebungen der vorgenannten Art sind nach dem Stand der Technik dadurch geprägt, dass es sich in der Regel um in sich geschlossene, nicht einfach beziehungsweise ohne Weiteres erweiterbare Systeme handelt, die darüber hinaus nicht selten auf die Einbeziehung von Geräten und Einrichtungen eines bestimmten Herstellers beschränkt sind. Die Reaktion solcher Systeme auf unterschiedliche Lebenssituationen oder beispielsweise tageszeitlich bedingte Umstände ist darüber hinaus nach dem Stand der Technik vergleichsweise deterministisch, das heißt klar bestimmt vorgegeben und nur wenig flexibel. Entsprechende Systeme beziehungsweise Smart Home Umgebungen sind dabei weder adaptiv noch selbstlernend.

Im Zusammenhang mit Konzepten des Smart Home ist es beispielsweise bekannt, die Anwesenheit einer Person oder bestimmter Personen in einer häuslichen Umgebung zu detektieren und beim Betreten oder Verlassen der betreffenden Umgebung durch die jeweilige Person vorbestimmte, für dieses Szenario festgelegte Abläufe durch Ansteuerung von Aktoren unterschiedlicher Komponenten einer solchen Smart Home Umgebung zu starten. Aus der Druckschrift KR 2009 0011 134 A ist es beispielsweise bekannt, das Betreten oder Verlassen eines Gebäudes mit Hilfe von der oder den Personen mitgeführter Markierungstags, nämlich von Identifikatoren auf Transponderbasis, festzustellen.

Andere Konzepte, wie sie beispielsweise durch Raddatz et al in "Sensor-basierte Erkennung und Reaktion im häuslichen Umfeld" (AAL Kongress 2012, Berlin) beschrieben werden, bedienen sich für den gleichen Zweck dazu geeigneter Sensoren. Die insoweit bekannten Systeme weisen jedoch ebenfalls, wie insbesondere an der festgelegten Art und Weise der Detektion des Betretens oder Verlassens des Raumes deutlich wird, einen vergleichsweise starren Zuschnitt auf. Auch sie sind zudem nicht darauf ausgelegt, die Reaktion auf entsprechende Veränderungen der Situation (Betreten oder Verlassen eines Raumes durch eine Person) selbstlernend oder in sonstiger Weise adaptiv anzupassen und dabei gegebenenfalls weitere Informationen zu berücksichtigen.

Der Erfindung liegt daher die Aufgabe zugrunde, die Nutzer einer Smart Home Umgebung beziehungsweise einer intelligenten häuslichen Umgebung durch eine Erhöhung der Flexibilität, mit welcher ein zur Realisierung einer solchen Umgebung verwendetes System auf sich verändernde Situationen reagiert, besser zu unterstützen. Die Verbesserung der Unterstützung eines oder mehrerer Nutzer soll sich dabei vorzugsweise nicht nur auf dessen unmittelbaren Aufenthalt in der intelligenten häuslichen Umgebung beziehen, sondern deutlich darüber hinausgehen, wobei die Unterstützung außerhalb dieser Umgebung jedoch auf den innerhalb und in unmittelbarer Umgebung des Smart Home bestehenden Gegebenheiten und auf dort eintretenden Ereignissen basiert. Hierzu sind ein Verfahren und ein System anzugeben.

Die Aufgabe wird durch ein Verfahren mit den Merkmalen des Patentanspruchs 1 gelöst. Ein die Aufgabe lösendes und zur Durchführung des Verfahrens geeignetes System ist durch den ersten Sachanspruch charakterisiert. Vorteilhafte Ausbeziehungsweise Weiterbildungen der Erfindung sind durch die jeweiligen Unteransprüche gegeben.

Das vorgeschlagene Verfahren bezieht sich auf eine intelligente häusliche Umgebung, in welcher eine Mehrzahl von Komponenten über eine zentrale Instanz miteinander zu einem System verknüpft ist. Im Kontext der Patentansprüche und der Beschreibung ist die vorgenannte zentrale Instanz selbst nicht zwingend innerhalb der betreffenden, intelligent ausgestalteten häuslichen Umgebung angeordnet. Im Hinblick auf webbasierte Anwendungen und die zunehmende Bereitstellung von Cloud-Diensten kann es sich hierbei vielmehr auch um eine an anderer Stelle im Internet angeordnete, eine Steuer- und Verarbeitungseinrichtung umfassende Instanz handeln oder aber auch um eine vergleichbare virtuelle Einrichtung, deren Funktionalitäten durch auf einem oder durch verteilt auf mehrere Server ablaufende Software realisiert werden. Dabei kann eine solche an zentraler Stelle im Internet angeordnete oder verteilt auf mehrere Server realisierte Instanz gegebenenfalls auch dazu dienen, entsprechende Funktionalitäten für eine Mehrzahl unterschiedlicher häuslicher Umgebungen bereitzustellen. Auch ist es denkbar, dass die zentrale Instanz sowohl aus teilweise vor Ort als auch aus teilweise im Internet angeordneten beziehungsweise virtuellen Komponenten besteht. In jedem Falle interagiert aber die zentrale Instanz mit Komponenten, wie beispielsweise Sensoren und Aktoren, welche vor Ort, das heißt als unmittelbarer Bestandteil einer intelligenten häuslichen Umgebung angeordnet sind. Die Interaktion mit diesen Komponenten kann hierbei über das Internet unter Einbeziehung als Bestandteil der jeweiligen häuslichen Umgebung angeordneter Zugangseinrichtungen erfolgen.

Die Unterstützung der Nutzer einer intelligenten häuslichen Umgebung erfolgt entsprechend dem vorgeschlagenen Verfahren derart, dass durch die zentrale Instanz situationsabhängig mindestens eine Komponente einer automatisierten Haustechnik gesteuert und/oder mindestens eine Ausgabeinformation für wenigstens einen Nutzer der intelligenten häuslichen Umgebung bereitgestellt wird. Zu diesem Zweck werden erfindungsgemäß die Komponenten des Systems sowie alle durch die zentrale Instanz mittels mindestens einer dafür ausgebildeten Komponente des Systems innerhalb der häuslichen Umgebung direkt oder indirekt identifizierbaren Subjekte und Objekte sowie deren Attribute und die zwischen ihnen bestehenden Beziehungen in einer Ontologie verwaltet. Die Erstellung entsprechender Ontologien ist grundsätzlich als bekannt anzusehen und soll daher im Rahmen der Erfindungsbeschreibung nicht Gegenstand detaillierterer Erörterungen sein. Was die Frage der indirekten Identifizierbarkeit von Subjekten oder Objekten anbelangt, soll an dieser Stelle nur darauf verwiesen werden, dass es beispielsweise möglich ist eine Person indirekt über selbst direkt identifizierbare, der betreffenden Person eindeutig zugeordnete Objekte beziehungsweise Gegenstände (zumindest vermeintlich - vermeintlich insoweit, als eine andere Person den betreffenden Gegenstand, gegebenenfalls auch widerrechtlich, an sich genommen haben könnte) zu identifizieren. Bei den in diesem Zusammenhang betrachteten Subjekten muss es sich nicht zwingend um eine das System selbst bewusst nutzende Person handeln. Vielmehr kann das System auch für einen mit dem System selbst nicht bewusst interagierenden, sich nur zeitweilig in der Smart Home Umgebung aufhaltenden Gast angelernt werden, zum Beispiel dahingehend, dass diesem Gast die Nutzung bestimmter Gegenstände in der Smart Home Umgebung gestattet wird. Auch kann es sich bei einem solchen Subjekt beispielsweise um ein Haustier handeln, wobei ein Nutzer des Systems beziehungsweise der intelligenten häuslichen Umgebung beispielsweise darauf hingewiesen wird, bestimmte, vorzugsweise mit einem Tag versehene Gegenstände (Steuermarke, Spielzeug oder dergleichen) mitzunehmen, wenn er mit seinem Hund das Haus verlässt. Als Identifikator kann dabei im Falle des Hundes beispielsweise ein getagtes Halsband (als mittelbarer Identifikator) oder, im Hinblick darauf, dass Haustiere, wie Hunde, heute ohnehin vielfach gechipt werden, ein unter die Haut des Tieres injizierter Chip dienen.

Zur Erkennung einer Situationsveränderung und einer daraus für die häuslichen Umgebung und/oder für mindestens einen ihrer Nutzer resultierenden neuen Situation wertet die zentrale Instanz mindestens eine, vorzugweise mehrere Informationen aus, welche mittels mindestens einer dafür ausgebildeten Komponente des Systems auslesbar sind. Bei der mindestens einen Information handelt sich um:
- eine Zustandsinformation mindestens eines zum System gehörenden Sensors, das heißt um Sensorsignale, welche der zentralen Instanz zur Auswertung zugeführt werden oder
- eine Identifikationsinformation, die durch einen Identifikator bereitgestellt wird, welcher ein Subjekt, wie insbesondere den mindestens einen Nutzer der intelligenten häuslichen Umgebung oder ein Objekt in dieser Umgebung direkt oder indirekt identifiziert oder
- eine Eingangsinformation über und/oder für mindestens einen Nutzer der intelligenten häuslichen Umgebung, welche durch mindestens eine elektronische Informationsquelle bereitgestellt wird.

Die mindestens eine zur Erkennung einer Situationsveränderung ausgewertete Information gehört also einer der Kategorien Zustandsinformationen eines oder mehrerer zum System gehörender Sensoren, Identifikationsinformationen eines oder mehrerer, jeweils ein Subjekt oder Objekt identifizierender Identifikatoren, Eingangsinformationen über und/oder für den mindestens einen Nutzer an. Im Hinblick auf die Auswertung mindestens einer Information der vorgenannten Kategorien ist es auch möglich, dass zur Erkennung einer neuen Situation mehrere Informationen nur einer dieser Kategorien oder mehrere Informationen mehrerer dieser Kategorien - und gegebenenfalls auch noch weitere Informationen - vom System ausgewertet werden müssen.

Durch die zentrale Instanz erfolgt unter Rückgriff auf die weiter oben genannte Ontologie und die mindestens eine vorgenannte Information eine Erkennung der aus der Situationsveränderung resultierenden neuen Situation. Schließlich wird durch die zentrale Instanz entsprechend der erkannten Situation die mindestens eine Komponente der zu der intelligenten häuslichen Umgebung gehörenden automatisierten Haustechnik gesteuert und/oder es erfolgt eine Informationsausgabe für mindestens einen Nutzer der intelligenten häuslichen Umgebung. Eine "Situation" ist in diesem Zusammenhang die Summe der augenblicklichen, mindestens einen Nutzer der intelligenten häuslichen Umgebung betreffenden Umstände, das heißt derjenigen Verhältnisse, die für ein diesen mindestens einen Nutzer betreffendes Geschehen beachtlich sind (zum Beispiel eine bevorstehende Dienstreise). Diesen Umständen trägt das Smart Home bestmöglich durch entsprechende Steuervorgänge für Komponenten der automatisierten Haustechnik (zum Beispiel Herunterfahren der Heizung, im Falle des Antritts der schon erwähnten Dienstreise) und/oder durch Informationen für den Nutzer Rechnung.. Bei den Informationen für den Nutzer kann es sich um Warnhinweise oder um allgemeine ihn unterstützende Hinweise handeln. So kann der Nutzer zum Beispiel beim Verlassen des Hauses, das heißt beim Verlassen der intelligenten häuslichen Umgebung, im Falle dessen, dass er einen mit einem Tag, also einem Identifikator versehenen Autoschlüssel mitnimmt und dies durch das System erkannt wird, darauf hingewiesen werden, auch die ebenfalls getagten Autopapiere mitzunehmen, sofern durch das System erkannt wird, dass er diese noch nicht bei sich führt beziehungsweise dass diese noch an irgendeiner Stelle im Hause liegen. Oder der Nutzer kann im Falle des erkannten Bevorstehens der angesprochenen Dienstreise auf dabei vorzugsweise von ihm mitzunehmende Gegenstände aufmerksam gemacht werden.

Was die Frage der Steuerung von Komponenten der automatisierten Haustechnik beziehungsweise der Ansteuerung eines oder mehrerer entsprechender Aktoren solcher Komponenten und die eventuelle Informationsausgabe für den oder die Nutzer anbelangt, so schließt die vorstehend und im Patentanspruch 1 genannte Und/Oder-Verknüpfung auch die Möglichkeit ein, dass an einen Nutzer in der Smart Home Umgebung zunächst eine Information ausgegeben wird, wonach ein sich auf eine Komponente der automatisierten Haustechnik beziehender Steuervorgang beabsichtigt ist und der diese Information erhaltende Nutzer den beabsichtigten Steuervorgang zunächst bestätigen oder gegebenenfalls ablehnen soll. Diese Möglichkeit ist aber unabhängig davon, dass als Konsequenz des Erkennens einer aus einer Situationsveränderung resultierenden bestimmten neuen Situation gegebenenfalls überhaupt nur mindestens eine für den wenigstens einen Nutzer bestimmte Ausgabeinformation durch die zentrale Instanz ausgegeben wird, ohne dass dies auch das Steuern einer Komponente der automatisierten Haustechnik bedingt oder nach sich zieht beziehungsweise die Steuerung einer solchen Komponente im Hinblick auf die erkannte Situation vorgesehen ist.

Grundgedanke der Erfindung ist es, vorzugsweise eine Vielzahl unterschiedlicher, sich gegebenenfalls auch unmittelbar auf einen Nutzer der Smart Home Umgebung beziehender Informationsquellen zur Situationserkennung zu nutzen und durch eine auf der Grundlage einer Ontologie erfolgende Vernetzung der von diesen Informationsquellen zur Verfügung gestellten Informationen eine Situationserkennung vorzunehmen sowie schließlich in Abhängigkeit des Ergebnisses der Situationserkennung Komponenten der Smart Home Umgebung zu steuern und/oder einen Nutzer dieser Umgebung mit (zusätzlichen) Ausgangsinformationen zu versorgen.

Die der Vernetzung der Informationen zugrunde zu legende Ontologie wird dabei zumindest in einem anfänglichen Minimalumfang im Zuge einer grundsätzlichen Konfiguration des Systems durch einen Nutzer der Smart Home Umgebung oder einen ihn dabei unterstützenden Techniker in der zentralen Instanz zu hinterlegen sein. Vorzugsweise wird dies menügeführt geschehen, wobei durch die die Konfigurierung vornehmende Person auf entsprechende Aufforderung des Systems für die Smart Home Umgebung relevante identifizierbare Subjekte und Objekte der zentralen Instanz bekannt gemacht werden. Vorzugsweise ebenfalls menügeführt werden dabei durch die betreffende Person diesen Subjekten und Objekten, welche innerhalb der Ontologie Klassen bilden, Attribute zugeordnet und zwischen den Klassen untereinander, zwischen den Klassen und ihren Attributen sowie gegebenenfalls zwischen den Attributen bestehende Beziehungen angegeben. Letzteres kann beispielsweise dadurch erfolgen, dass der die Konfigurierung vornehmenden Person im Rahmen der Menüführung unterschiedliche Vorschläge für derartige Beziehungen unterbreitet werden und die Person die nach ihrer Auffassung zutreffende Beziehung auswählt. Vorzugsweise werden der betreffenden Person zur Neuaufnahme von Subjekten oder Objekten in die Ontologie im Rahmen der Menüführung geeignete Templates beziehungsweise Vorlagen in Form oder als Bestandteil entsprechender Bildschirmmasken zur Verfügung gestellt.

Die vorstehend angesprochene Unterstützung des Nutzers bei der Konfiguration des Systems, insbesondere auch bei der Erstellung und Pflege der Ontologie, muss dabei nicht zwingend mittels oder nur mittels einer graphischen Nutzerschnittstelle erfolgen. Vielmehr kann der Nutzer, gegebenenfalls nur ergänzend, auch durch ein Sprachdialogsystem und/oder durch eine Gestensteuerung mit Hilfe zugehöriger Ein- und Ausgabemittel unterstützt werden. So ist es zum Beispiel denkbar, dass der Nutzer seine mit einem eindeutigen Identifikator, wie einem Tag auf der Basis eines passiven RFID-Transponders, versehenen Autoschlüssel zum Zweck der Aufnahme dieses Objekts in die Ontologie vor eine Kombination aus Kamera und RFID-Leser hält und in ein Mikrofon den Satz spricht: "Dies sind meine Autoschlüssel".

Entsprechend einer vorteilhaften Weiterbildung des Verfahrens erfolgt durch die zentrale Instanz neben der Erkennung einer neuen Situation, auch die Vorhersage eines möglichen Szenarios im Hinblick auf sich an die erkannte neue Situation anschließender Situationen. Gemäß einer solchen Verfahrensgestaltung erfolgen dann die Steuerung der mindestens einen Komponente der automatisierten Haustechnik und/oder die Ausgabe der mindestens einen Ausgabeinformation entsprechend dem vorhergesagten Szenario. Selbstverständlich kann es insbesondere im Falle einer Steuerung einer oder mehrerer Komponenten der automatisierten Haustechnik auf der Grundlage einer Situationsvoraussage besonders vorteilhaft sein, wenn der oder die Nutzer eine Information über den beabsichtigten Steuervorgang erhalten, mit der Möglichkeit diesen zu bestätigen oder gegebenenfalls abzulehnen.

Zur Vermeidung permanenter Unterbrechungen des Alltags des oder der Nutzer des Smart Home ist es aber auch denkbar, dass ein Nutzer insbesondere von einem selbstlernenden System nicht ausdrücklich zur Bestätigung oder Ablehnung einer neuen, vom System erkannten Situation aufgefordert wird, sondern beispielsweise durch Signaltöne, durch farbliche Veränderungen optischer Anzeigemittel oder dergleichen, lediglich darauf aufmerksam gemacht wird, dass das System eine neue Situation erkannt hat, aber die insoweit durch das System getroffene Schlussfolgerung noch nicht validiert wurde. Der Nutzer kann dann gegebenenfalls durch ein "Stopp" (zum Beispiel durch Betätigen eines entsprechenden Eingabemittels oder Hineinsprechen in ein Mikrofon) unmittelbar Einfluss nehmen oder zu einem späteren Zeitpunkt manuell in das System eingreifen und die vom System erkannte Situation bestätigen oder korrigieren. Hierbei macht das System zumindest im erstgenannten Fall der Möglichkeit einer unmittelbaren Reaktion des Nutzers durch das zuvor erwähnte akustische oder visuelle (Farbveränderung) Signal den Nutzer gewissermaßen darauf aufmerksam, dass es zumindest kurzzeitig in einem Lernmodus wechselt.

Über die eingangs genannten Informationen hinaus können entsprechend einer besonders vorteilhaften Verfahrensgestaltung in die Situationserkennung, aber insbesondere in eine gegebenenfalls vorgesehene Situationsvorhersage beziehungsweise Vorhersage eines Szenarios noch weitere Informationen mit einbezogen werden. An dieser Stelle soll zur Verdeutlichung des Vorstehenden lediglich folgendes angemerkt werden. Bei den eingangs genannten Informationen für oder über einen Nutzer der intelligenten häuslichen Umgebung kann es sich beispielsweise um einen Eintrag in einem elektronischen Kalender des Nutzers oder um eine an den Nutzer gerichtete E-Mail handeln, aus dem beziehungsweise aus der hervorgeht, dass der Nutzer zu einem bestimmten Termin eine Dienstreise antreten wird. Hierdurch wird für das System beziehungsweise die zentrale Instanz der intelligenten häuslichen Umgebung, natürlich unter der Voraussetzung, dass für das System ein Zugriff auf die den elektronischen Kalender oder das E-Mail-Postfach des Nutzers gegeben ist, eine Situationsveränderung erkennbar aus welcher eine neue Situation resultiert.

Entsprechend den Intentionen der Erfindung kann das Smart Home beziehungsweise die intelligente häusliche Umgebung mit ihrer zentralen Instanz den Nutzer dabei unterstützen, dieser Situation in geeigneter Weise Rechnung zu tragen. Was die gegebenenfalls weiteren in die Situationserkennung beziehungsweise in die Szenariovorhersage einzubeziehenden Informationen anbelangt, ist es denkbar, dass der zuvor erwähnte Kalendereintrag oder die E-Mail einen Hinweis auf den Zielort der angesprochenen Dienstreise enthält und die zentrale Instanz (beispielsweise über das Internet) Informationen über das Wetter an diesem Zielort einholt und diese für den Nutzer ausgibt oder Ihn bei der Zusammenstellung auf der Dienstreise mitzuführender Kleidung und/oder Utensilien unterstützt. Im Gegensatz zur grundsätzlichen Verfahrensgestaltung kann es sich bei den weiteren (Eingangs-) Informationen beziehungsweise Zusatzinformationen auch um Informationen handeln, welche in dieser Form unmittelbar an den Nutzer ausgegeben werden, so dass demnach die Ausgabeinformationen für den Nutzer in diesem Falle nicht zwingend verschieden von den zusätzlichen (Eingangs-) Informationen beziehungsweise Zusatzinformationen sind.

Darüber hinaus können in Erweiterung des Verfahrens letztlich beliebige andere, elektronisch verfügbare Informationen, welche der zentralen Instanz in geeigneter Weise zugänglich gemacht werden können, in die Situationserkennung einbezogen und/oder zur Szenariovorhersage herangezogen werden. Insoweit ist die Heranziehung weiterer Informationen der vorgenannten Art (Kalender eines Nutzers oder Wetterinformationen zum Zielort einer voraussichtlich erfolgenden Dienstreise) nur als ein Beispiel anzusehen, durch welches der gewissermaßen ganzheitliche und umfassende Ansatz der Erfindung nicht beschränkt wird. Auch bei den im Patentanspruch 1 genannten Kategorien von Informationsquellen handelt es sich - dies sei an dieser Stelle nochmals betont - lediglich um Kategorien, von denen zumindest ein für die Situationserkennung und/oder die Szenariovorhersage herangezogen wird. Dies schließt indes die Heranziehung gegebenenfalls auch zahlreicher weiterer Informationsquellen nicht aus.

Was die Frage der Heranziehung von Zustandsinformationen eines oder mehrerer Sensoren anbelangt, kommen unter anderem beispielsweise mittels einer einen Sensor ausbildenden Kamera erfasste Fotos oder Videostreams von Subjekten oder Objekten in der häuslichen Umgebung in Betracht. Ferner können durch die zentrale Instanz zur Erkennung einer Situationsveränderung und/oder zur Vorhersage eines möglichen Szenarios auch akustische Informationen oder Informationen von Bewegungssensoren ausgewertet werden.

Vorzugsweise, aber nicht zwingend, erfolgen die Situationserkennung und/oder die Vorhersage bezüglich sich an die erkannte Situation entsprechend einem möglichen Szenario anschließender Situationen sowie die Steuerung der mindestens einen Komponente der automatisierten Haustechnik und/oder die Ausgabe der mindestens einen Ausgabeinformation für den wenigstens einen Nutzer auf der Grundlage eines in Speichermittel des Systems gehaltenen Regelwerks. Entsprechendes gilt auch für die Einbeziehung weiterer Informationen in die Situationserkennung und/oder die Szenariovorhersage, deren zusätzliche Verwendung die zentrale Instanz vorzugsweise nach einem Regelwerk aus mindestens einer bereits vorliegenden Eingangsinformation ableitet. Hierbei ist es lediglich eine Definitionsfrage, ob man in diesem Zusammenhang von je einem Regelwerk oder einem gemeinsamen Regelwerk ausgeht beziehungsweise sprechen möchte. Es ist dabei auch völlig irrelevant, ob das oder die Regelwerke in einem gemeinsamen Speicherbereich beziehungsweise einem Speicherblock oder in einer gemeinsamen Datenbank abgelegt oder auf verschiedene Einheiten (zum Beispiel unterschiedliche Server einer überwiegend im Internet angesiedelten zentralen Instanz) verteilt sind.

Unter Umständen kann ein Regelwerk oder können Regelwerke für die vorgenannten Zwecke aber auch zu starr sein. Dies gilt insbesondere, wenn die bezüglich einer intelligenten Heimumgebung zu beachtenden Gegebenheiten sehr komplex sind (zum Beispiel viele einzubeziehende Komponenten und/oder viele zu berücksichtigende Objekte und Subjekte, wie eine Vielzahl von Nutzern oder Bewohnern des Smart Home) und es im Falle einer Abbildung dieser Gegebenheiten in einem Regelwerk umfangreicher Regeln bedarf, bei denen es sich nicht lediglich um einfache beziehungsweise triviale Regeln handelt. Dabei gilt es auch zu bedenken, dass ab einem bestimmten Umfang des Regelwerks beziehungsweise einer bestimmten Menge von Regeln ein wachsender Aufwand betrieben werden muss, um die Regeln zu koordinieren und um beispielsweise sich widersprechende Regeln auszuschließen. Daher umfasst die Erfindung unter Berücksichtigung der bezüglich des Verfahrens im Patentanspruch 1 angegebenen Merkmale grundsätzlich auch die Möglichkeit, dass für die Situationserkennung und/oder die Szenariovorhersage sowie für die Steuerung der mindestens einen Komponente der automatisierten Haustechnik und/oder die Ausgabe der mindestens einen Ausgabeinformation für den wenigstens einen Nutzer unter Verwendung der Prinzipien des maschinellen Lernens erfolgt, wobei ein dazu ausgebildetes System eine Mehrzahl unterschiedlichster Informationen (von Sensoren, von Identifikatoren oder aus elektronischen Informationsquellen) beispielsweise unter Bildung neuronaler Netze miteinander vernetzt. Allerdings müssen die nach den Prinzipien des maschinellen Lernens erfolgenden Schlussfolgerungen und die automatisierte Adaption entsprechender Erkennungs- und Entscheidungsprozesse überwacht werden, damit es dabei nicht zu fehlerhaften Annahmen und zu völlig falschen Ergebnissen kommt. Im Hinblick auf die letztgenannten Probleme maschinellen Lernens, wird daher beim Einsatz der Erfindung und in den nachfolgenden Darstellungen bevorzugt von der Heranziehung geeigneter Regeln und von deren Adaption ausgegangen.

Wie bereits ausgeführt, wird dem mindestens einen Nutzer der intelligenten häuslichen Umgebung entsprechend möglicher Verfahrensgestaltungen eine Information über einen aufgrund einer Situationserkennung oder einer Szenariovorhersage beabsichtigten Steuervorgang ausgegeben, die dieser bestätigen (annehmen) oder ablehnen kann. Das Verfahren kann hierbei so gestaltet sein, dass der Prozess und, soweit gegeben, das Regelwerk nach welchem sich die Reaktion des das Smart Home ausbildenden Systems beziehungsweise seiner zentralen Instanz gegebenenfalls bestimmt, auf der Grundlage der von einem Nutzer hinsichtlich des Bestätigens oder Ablehnens eines beabsichtigten Steuervorgangs getroffenen Entscheidung adaptiert wird. Eine solche Adaption ist ferner denkbar, wenn das System feststellt, dass ein Nutzer gegebenenfalls mehrfach für ihn bestimmte, im Ergebnis der Situationserkennung oder Szenariovorhersage ausgegebene Informationen ignoriert, er also beispielsweise beim Verlassen des Hauses auf das Mitnehmen eines Gegenstandes hingewiesen wird, er jedoch mehrfach das Haus verlässt, ohne diesen Hinweis zu befolgen, was für das System sensorisch und/oder mittels eines den Gegenstand identifizierenden Tags (Identifikators) feststellbar ist. Hierbei erfolgt die Adaption der Regeln beispielsweise auf der Grundlage festgelegter Maximalwerte für ein solches Ignorieren, wobei die Häufigkeit des Ignorierens durch das Führen von Zählern im System festgestellt wird. Eine Adaption der Regeln kann außerdem erfolgen, wenn der Nutzer im Zusammenhang mit einer detektierten Situation mehrere Male einen bestimmten Gegenstand (zum Beispiel seine Brille) hinzufügt, wobei das System dies die ersten Male (gegebenenfalls entsprechend eines vordefinierten Häufigkeitswerts) nur speichert und erst danach diesen Gegenstand zur internen Situationserkennung und Szenariovorhersage hinzufügt. Eine aufgrund der vorgenannten Faktoren durch das System beziehungsweise durch dessen zentrale Instanz erfolgende Anpassung/Adaption insbesondere eines zugrundeliegenden Regelwerks kann dabei unter Verwendung einer Fuzzy-Logik geschehen.

Je nach der konkreten Ausgestaltung des die intelligente häusliche Umgebung ausbildenden Systems kann dessen Konfigurierung, das heißt insbesondere die Pflege der verwalteten Ontologie, durch den mindestens einen Nutzer der Smart Home Umgebung entweder mit Hilfe einer Ausgabe- und Eingabemittel umfassenden peripheren Einheit der zentralen Instanz oder mittels mobiler, mit der Smart Home Umgebung und deren zentralen Instanz vernetzbarer Endgeräts des oder der Nutzer erfolgen. Im letztgenannten Falle können entsprechende Eingaben beispielsweise mittels eines Smartphones oder eines Tablet-PCs erfolgen, über dessen Display dabei auch die zur Unterstützung der Konfigurierung durch den Nutzer erforderlichen Systeminformationen ausgegeben werden. In diesem Zusammenhang kommt auch der Einsatz eines Sprachdialogsystems in Betracht. Entsprechendes gilt darüber hinaus auch für die im Ergebnis des Verfahrensablaufs gegebenenfalls für den betreffenden Nutzer durch das System ausgegebenen Ausgabeinformationen. Außerdem kann es vorgesehen sein, dass der oder die Nutzer mittels entsprechender Endgeräte aktiv (also von sich aus) verändernd in ein gegebenenfalls bestehendes Regelwerk des Systems eingreifen.

Ein die Aufgabe lösendes, zur Durchführung des zuvor erläuterten Verfahrens geeignetes System zur Unterstützung von Nutzern in einer intelligenten häuslichen Umgebung besteht aus über eine zentrale Instanz zu einem System verknüpften Komponenten. Die zentrale Instanz, über deren Beschaffenheit als lokale Steuer- und Verarbeitungseinrichtung oder als virtuelle Steuer- und Verarbeitungseinrichtung mit mittels Servertechnik bereitgestellten Funktionalitäten Ausführungen bereits zum Verfahren gemacht wurden, verfügt neben einer Steuer- und Verarbeitungseinrichtung zumindest über Speichermittel. Zum System gehört ferner mindestens eine Nutzerschnittstelle, das heißt eine Schnittstelle zur direkten Interaktion eines Nutzers mit dem System. Bei der Nutzerschnittstelle kann es sich um Bedienelemente, ein Display oder um andere direkt an der Steuer- und Verarbeitungseinrichtung angeordnete Ein- und Ausgabemittel für einen Zugriff auf die Steuer- und Verarbeitungseinrichtung oder aber um ein mobiles Endgerät des Nutzers (beispielsweise Smartphone oder Tablet-PC) mit mindestens einem Display handeln, welches über ein Interface an das System, respektive mit dessen Steuer- und Verarbeitungseinrichtung koppelbar ist.

Zu den über die zentrale Instanz miteinander verknüpften Komponenten gehören zumindest Mittel zur Bereitstellung von Informationen zu Subjekten und Objekten in der häuslichen Umgebung, wenigstens ein Aktor zur Steuerung einer Komponente einer automatisierten Haustechnik und Mittel zur Ausgabe von Ausgabeinformationen für wenigstens einen Nutzer der intelligenten häuslichen Umgebung.

Bei den vorgenannten die Mitteln zur Bereitstellung von Informationen handelt es sich im Hinblick auf die entsprechend dem Grundgedanken der Erfindung für die Situationserkennung herangezogenen Informationen, um Mittel, welche eine Zustandsinformation bereitstellen und/oder um Identifikatoren, welche eine Identifikationsinformation zu einem Subjekt oder zu einem Objekt in der häuslichen Umgebung bereitstellen und/oder um elektronische Informationsquellen, welche Eingangsinformationen über und/oder für den mindestens einen Nutzer bereitstellen. Die vorgenannten unterschiedlichen Informationsquellen sind von der zentralen Instanz auslesbar oder übermitteln an diese selbsttätig Informationen.

Das System umfasst ferner eine in den Speichermitteln gehaltene Ontologie und mindestens ein ebenfalls in den Speichermitteln gehaltenes Regelwerk. Gegenstand des Regelwerks sind Regeln zur Situationserkennung und zur Ableitung von Steuersignalen für Komponenten der automatisierten Haustechnik und/oder von Ausgabeinformationen für den wenigstens einen Nutzer der intelligenten häuslichen Umgebung. In der vorgenannten und auch im Zusammenhang mit dem Verfahren schon angesprochenen Ontologie werden die Komponenten des Systems und alle durch die zentrale Instanz mittels mindestens einer dafür ausgebildeten Komponente des Systems innerhalb der häuslichen Umgebung identifizierbaren Subjekte und Objekte sowie deren Attribute und die zwischen ihnen bestehenden Beziehungen durch die zentrale Instanz verwaltet. Die Ausbildung der zentralen Instanz ist dabei derart, dass es ihr ermöglicht ist, mittels entsprechender Einheiten oder Funktionsgruppen, welche soft- und/oder hardwarebasiert sind, von den Informationsquellen eingehende Informationen auf der Basis der von ihr verwalteten Ontologie miteinander zu vernetzen, eine jeweils bestehende Situation zu erkennen und, vorzugsweise außerdem, ausgehend von dieser erkannten Situation eine Vorhersage bezüglich sich an diese erkannte Situation entsprechend einem möglichen Szenario anschließender Situationen zu treffen. Insoweit sind ein Ontologie-Manager und eine Einheit zur Situationserkennung vorgesehen, welche als Bestandteile der Steuer- und Verarbeitungseinrichtung ausgebildet oder unmittelbar mit ihr verbunden sind. Darüber hinaus kann, im Hinblick auf die bereits angesprochene vorzugsweise Eignung der Steuer- und Verarbeitungseinrichtung auch zur Vorhersage eines möglichen, sich an eine erkannte Situation anschließenden Szenarios, außerdem eine entsprechende Einheit Bestandteil der Steuer- und Verarbeitungseinrichtung oder unmittelbar mit ihr verbunden sein, wobei dann auch hierfür ein Regelwerk in den Speichermitteln des Systems hinterlegt ist.

Was die gegebenenfalls zur Situationserkennung und Vorhersage herangezogenen Zustandsinformationen zum System gehörender Sensoren anbelangt, kann es sich hierbei beispielsweise um sensorisch erfasste Druck- oder Temperaturdaten einer Heizungsanlage, Temperaturdaten eines Kühlschranks oder Statusinformationen einer Jalousiesteuerung (Jalousie ist oben oder unten) handeln, welche aus der mindestens einen Datenbank des Systems zur Situationserkennung und/oder Szenariovorhersage abrufbar und zur Aktualisierung auch dorthin replizierbar sind. Die Identifikationsinformationen, also Informationen, welche einen Nutzer, ein sonstiges Subjekt (beispielsweise ein Haustier eines Nutzers) oder ein Objekt identifizieren, könnten beispielsweise ebenfalls sensorisch, nämlich mittels mindestens einer zu einem hochentwickelten Bilderkennungssystem gehörenden Kamera, gewonnen und bereitgestellt werden. Ausgehend von den heute gegebenen technischen Möglichkeiten werden solche Informationen jedoch vorzugsweise durch den betreffenden Subjekten und Objekten zugeordnete Tags bereitgestellt. Hierbei kann es sich beispielsweise um einen QR-Code oder einen Strichcode handeln, der ebenfalls sensorisch erfassbar ist. Denkbar und für die Praxis als vorteilhaft anzusehen ist darüber hinaus ein Tagging unter Verwendung von Transpondern, vorzugsweise von passiven, im Wege der Near Field Communication (NFC) mittels eines entsprechenden Lesers auslesbaren RFID-Tags.

Um beispielsweise einen Nutzer der Smart Home Umgebung nicht selber mit einem entsprechenden Transponder ausstatten zu müssen, kann dessen Identifikation auch auf indirektem Wege, nämlich mit Hilfe von ihm mitgeführter, getagter Geräte und/oder Gegenstände erfolgen. Als ein solches getagtes Gerät kann dabei gegebenenfalls auch ein dem Nutzer gehörendes, ihm demnach eindeutig zuzuordnendes Smartphone oder ein vergleichbares Gerät, wie ein Tablet-PC dienen.

Nachfolgend sollen Ausführungsbeispiele für die Erfindung gegeben werden und anhand einer Zeichnung eine mögliche Ausbildungsform des erfindungsgemäßen Systems erläutert werden. Die zur nochmaligen Erläuterung der Erfindung dienenden Zeichnungen zeigen im Einzelnen:
- Fig. 1:: eine mögliche Ausbildungsform des Systems in der Art eines Blockschaltbildes,
- Fig. 2:: ein Schema möglicher Klassen, in einer zur Umsetzung des Verfahrens verwendbaren Ontologie,
- Fig. 3:: einen Ausschnitt eines groben Ablaufschemas für einen möglichen Ablaufs des Verfahrens.

Zunächst soll aus der Verfahrenssicht ein Beispiel dafür gegeben werden, wie Nutzer einer intelligenten häuslichen Umgebung (Smart Home) gemäß der Erfindung unterstützt werden können. Dazu sei angenommen, ein Nutzer des Smart Home muss am kommenden Tag eine Dienstreise durchführen. Die Dienstreise ist in seinem Onlinekalender vermerkt. In dem entsprechenden Vermerk ist auch die Ziellokation beziehungsweise der Zielort der Dienstreise genannt. Der in dem Onlinekalender enthaltene Vermerk und/oder die Entnahme eines mit einem RFID-Tag markierten Koffers dienen dem System als Auslöser für die Situationserkennung. Auf der Basis der vermerkten Ziellokation können durch die zentrale Instanz online die dortigen Wetterverhältnisse abgefragt und dem Nutzer anhand dessen Vorschläge für (vorkonfigurierte) Bekleidungslisten auf dem Display 8 eines mit dem System vernetzten mobilen Endgeräts 3 unterbreitet werden. Die Online-Abfrage des Wetters am Zielort der Dienstreise erfolgt durch eine Einrichtung 9, welche als Subsystem der zentralen Instanz beziehungsweise seiner Steuer- und Verarbeitungseinrichtung 1 die von den vom System verwendeten Informationsquellen bereitgestellten Informationen sammelt sowie auf der Grundlage der von der Steuer- und Verarbeitungseinrichtung 1 jeweils erkannten Situation oder des jeweils vorhergesagten Szenarios entsprechende Komponenten der Heimautomatisierung beziehungsweise deren Aktoren 7 ansteuert und/oder Informationen für den oder die Nutzer ausgibt.

Sofern der Onlinekalender oder eine E-Mail, über welche der Nutzer über die Dienstreise informiert wird, auch Angaben über deren Dauer enthalten, kann dies der zentralen Instanz des Smart Home als Basis für das Herunterregeln der Heizung und des Warmwasserreservoirs dienen. Stellt das System, das heißt, die Steuer- und Verarbeitungseinrichtung 1 seiner zentralen Instanz aufgrund von Zustandsinformationen zum System gehörender Sensoren 4, 4' fest, dass der Nutzer das Haus verlässt und gegebenenfalls mit dem Auto wegfährt, kann dies entsprechend dem in Speichermitteln 2, vorzugsweise in einer Datenbank, gehaltenen Regelwerk dazu führen, dass die Alarmanlage scharf gestellt und die automatische Bewässerung für die Pflanzen eingeschaltet wird.

Weitere denkbare Einsatzbeispiele sind:
- eine Erinnerung zum Mitnehmen der Fahrzeugpapiere im Flur auf dem Weg zur Wohnungstür vor dem Verlassen der Wohnung, wenn der Autoschlüssel eingesteckt wurde,
- eine Erinnerung an eine ablaufende Leihfrist eines Büchereibuches,
- eine Erinnerung an die Mitnahme des Regenschirms bei Regen draußen oder am Zielort,
- eine Nachfrage, ob der Herd/Ofen abgeschaltet werden soll, wenn die Wohnung verlassen wird.

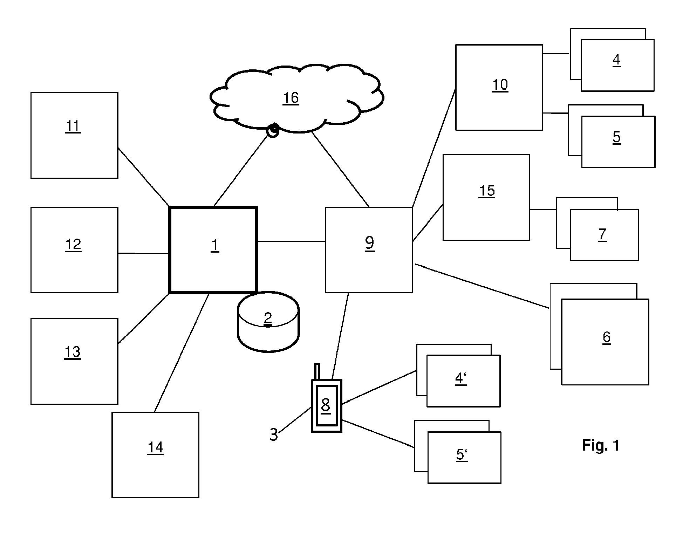

Anhand der Fig. 1 soll ein möglicher Aufbau des erfindungsgemäßen Systems zur Unterstützung von Nutzern einer intelligenten häuslichen Umgebung beschrieben werden. Die Komponenten des Systems werden über eine zentrale Instanz miteinander verknüpft, welche insbesondere eine Steuer- und Verarbeitungseinrichtung 1, Speichermittel 2 und - in dem gezeigten Beispiel - das schon erwähnte Subsystem 9 zum Sammeln der Informationen für die Situationsbewertung und zur Ausgabe von Steuerbefehlen an über eine spezielle Einheit 15 zu ihrer Ansteuerung angebundene Aktoren 7 von Heimautomatisierungskomponenten und/oder von Nutzerinformationen (Ausgangsinformationen) umfasst. Die Informationen, wie beispielsweise (Soll- und Ist-) Zustandsinformationen der Sensoren 4, 4' sind durch die zentrale Instanz abgreifbar und werden auch dorthin, nämlich in die Datenbank in den Speichermitteln 2 repliziert. Sensoren 4, 4' und Identifikatoren 5, 5' in Form von RFID-Tags oder- im Falle des hier als Nutzerschnittstelle 3 dienenden Smartphones - in Form einer SIM-Karte können dabei Informationen bei der zentralen Instanz sowohl über eine Einheit 10, bei der es sich um eine Kombination aus Datenknoten beziehungsweise Datenverteiler und Tag-Leser handelt, als auch über ein entsprechend ausgestattetes, als Nutzerschnittstelle 3 fungierendes mobiles Endgerät eines Nutzers einliefern. Bei der Einheit 10 handelt es sich um eine Standardkomponente etablierter Heimautomatisierungssysteme. Die Einlieferung der Informationen erfolgt über das Subsystem 9. Die Informationen, wie beispielsweise Zustände der Sensoren 4, 4', werden von der Steuer- und Verarbeitungseinrichtung 1 in den Speichermitteln 2, also in der Datenbank abgespeichert. Bei dem zuvor angesprochenen mobilen Endgerät kann es sich um einen Tablet-PC oder das Smartphone eines Nutzers handeln. Über eine entsprechende elektronische Mittel werden Informationsquellen 6, wie der Onlinekalender eines Nutzers oder externe Informationsquellen, beispielsweise zur Bereitstellung von Wetterinformationen für den Zielort einer Dienstreise eingebunden.

Weitere Subsysteme der zentralen Instanz, das heißt ihrer Steuer- und Verarbeitungseinrichtung 1, welchen die durch das Subsystem 9 gesammelte Informationen zur Verarbeitung zugeführt werden und welche ihrerseits die Verarbeitungsergebnisse zur Ausgabe von Steuerbefehlen für Komponenten der Heimautomatisierung oder von Informationen für den Benutzer Systems übermitteln, sind ein Ontologie-Manager 11, eine Einheit 12 zur Situationserkennung, eine Einheit 13 zur Szenariovorhersage und eine Lern- und/oder Adaptionseinheit 14. Bestandteil der Einheiten 12 und 13 oder ihnen unmittelbar zugeordnet sein können auch entsprechende, hier nicht dargestellte Regelwerke zur Situationserkennung, zur Szenariovorhersage und zur Ableitung von Steuersignalen und/oder an Nutzer auszugebenden Informationen entsprechend der erkannten Situation und/oder dem im Hinblick auf nachfolgende Situationen vorhergesagten Szenario, wobei aber diese Regelwerke vorzugsweise zentral in der Datenbank in den Speichermitteln 2 gehalten werden können.

An dieser Stelle sei angemerkt das die Fig. 1 und die dazu vorstehend gegebene Beschreibung lediglich der Verdeutlichung der grundsätzlichen, in Hard- und Software abgebildeten Architektur dienen. Idealerweise kann zumindest eine Mehrzahl dieser Komponenten zugleich in einer zentralen Onlineinfrastruktur 16 als Teil eines Cloud-Service 16 im Internet verortet sein.

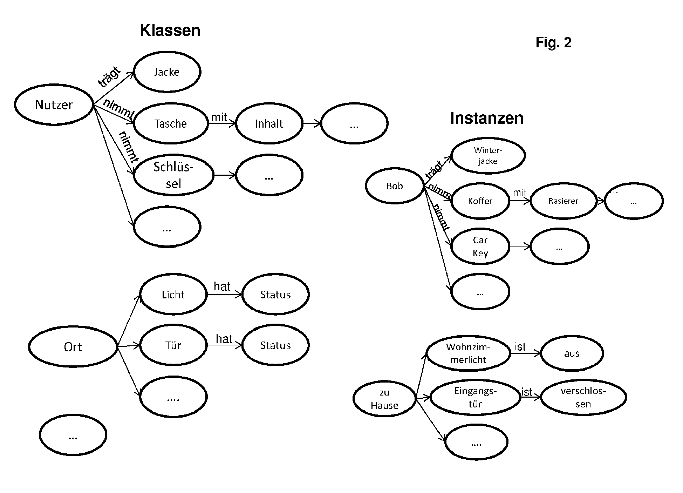

In der Fig. 2 sind in schematisierter Form Teile einer Ontologie, insbesondere einige mögliche, darin enthaltene Klassen, deren zugehörige Instanzen und Attribute sowie die zwischen ihnen bestehenden Beziehungen angedeutet. Hierbei sollen die Abbildung für sich sprechen und weitergehende theoretische Erläuterungen zu Ontologien unterbleiben, da deren Gestaltung selbst nicht Gegenstand der Erfindung ist.

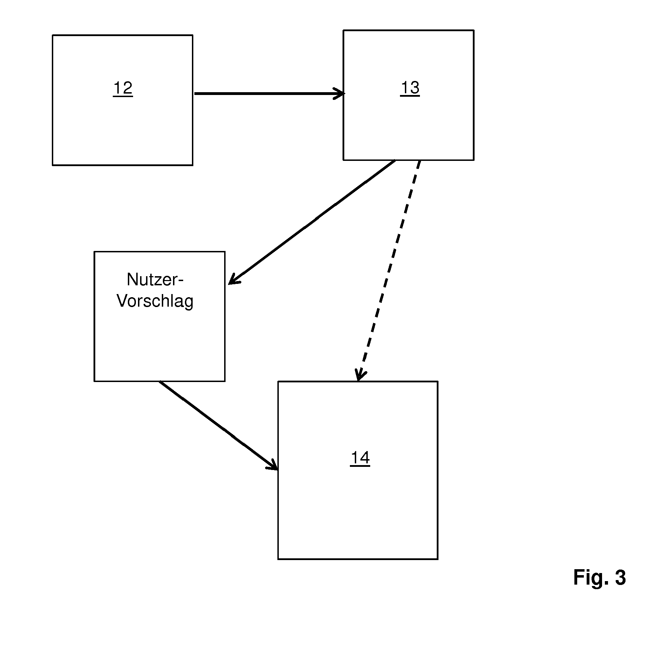

Die Fig. 3 zeigt einen Ausschnitt eines groben Ablaufschemas für einen möglichen Ablauf des erfindungsgemäßen Verfahrens. Demnach erfolgt zunächst (getriggert durch eine Information von einem Sensor, einem Identifikator, beispielsweise einem RFID-Tag oder eine sich auf einen Nutzer beziehende Informationsquelle, welche eine Situationsveränderung signalisiert) eine Situationserkennung in der Einheit 12. Darüber hinaus erfolgt aber in der Einheit 13 eine Szenariovorhersage im Hinblick auf mögliche, der erkannten Situation folgende Situationen. Im Ergebnis der Szenariovorhersage wird schließlich an einen Nutzer beispielsweise an einem Display 8 eines als Nutzerschnittstelle 3 fungierenden mobilen Endgeräts eine Information in Form eines ihm unterbreiteten Vorschlags (beispielsweise zur Mitnahme eines bestimmten Gegenstandes auf eine Dienstreise) ausgegeben. Durch seine Antwort auf den Vorschlag nimmt der Nutzer, beispielsweise indem er den Vorschlag ablehnt, auf das von der zentralen Instanz für die Szenariovorhersage herangezogene Regelwerk Einfluss. Dieses wird dabei gegebenenfalls nach den Grundsätzen einer Fuzzy-Logik angepasst.

## Patentansprüche

1. Verfahren zur Unterstützung von Nutzern in einer intelligenten häuslichen Umgebung mit über eine zentrale Instanz zu einem System verknüpften Komponenten, nach welchem veranlasst durch die zentrale Instanz situationsabhängig mindestens eine Komponente einer automatisierten Haustechnik gesteuert und/oder mindestens eine Ausgabeinformation für wenigstens einen Nutzer der intelligenten häuslichen Umgebung bereitgestellt wird, **dadurch gekennzeichnet, dass**
a.) die Komponenten des Systems und alle durch die zentrale Instanz mittels mindestens einer dafür ausgebildeten Komponente des Systems innerhalb der häuslichen Umgebung identifizierbaren Subjekte und Objekte sowie deren Attribute und die zwischen ihnen bestehenden Beziehungen in einer Ontologie verwaltet werden,
b.) von der zentralen Instanz eine Situationsveränderung durch Auswertung mindestens einer Information mindestens einer der nachfolgend genannten Kategorien erkannt wird
i. Zustandsinformationen mindestens eines zum System gehörenden Sensors,
ii. Identifikationsinformationen mindestens eines ein Subjekt oder ein Objekt in der häuslichen Umgebung identifizierenden Identifikators,
iii. Eingangsinformationen über und/oder für den mindestens einen Nutzer, die durch eine elektronische Informationsquelle bereitgestellt wird und verschieden von der mindestens einen Ausgabeinformation ist,
c.) durch die zentrale Instanz unter Rückgriff auf die Ontologie nach a.) und die mindestens eine Information gemäß b) die aus der Situationsveränderung für die häusliche Umgebung und/oder für mindestens einen ihrer Nutzer resultierende neue Situation erkannt wird,
d.) die Steuerung der mindestens einen Komponente der automatisierten Haustechnik und/oder die Ausgabe der mindestens einen Ausgabeinformation für den wenigstens einen Nutzer entsprechend der gemäß c.) erkannten Situation erfolgt.

2. Verfahren nach Anspruch 1, **dadurch gekennzeichnet, dass** durch die zentrale Instanz neben der Erkennung einer neuen Situation, ausgehend von dieser Situation, eine Vorhersage bezüglich sich an die erkannte Situation entsprechend einem möglichen Szenario anschließender Situationen und die Steuerung der mindestens einen Komponente der automatisierten Haustechnik und/oder die Ausgabe der mindestens einen Ausgabeinformation für den wenigstens einen nutzer entsprechend diesem Szenario erfolgt.

3. Verfahren nach Anspruch 2, **dadurch gekennzeichnet, dass** im Falle des Erkennens einer neuen Situation anhand mindestens einer Eingangsinformation über und/oder für den mindestens einen Nutzer die Vorhersage eines Szenarios unter Einbeziehung mindestens einer Zusatzinformation erfolgt, welche die zentrale Instanz von einer elektronischen Informationsquelle bezieht.

4. Verfahren nach einem der Ansprüche 1 bis 3, **dadurch gekennzeichnet, dass** die Erkennung einer resultierenden neuen Situation und/oder die Vorhersage eines Szenarios durch die zentrale Instanz und die Steuerung der mindestens einen Komponente der automatisierten Haustechnik und/oder die Ausgabe der mindestens einen Ausgabeinformation für den wenigstens einen Nutzer entsprechend der erkannten Situation oder des vorhergesagten Szenarios auf der Grundlage mindestens eines in Speichermitteln der zentralen Instanz gehaltenen Regelwerks erfolgt.

5. Verfahren nach Anspruch 1 oder 4, **dadurch gekennzeichnet, dass** dem mindestens einen Nutzer der intelligenten häuslichen Umgebung das Einpflegen neuer Subjekte und Objekte mit ihren Attributen und Beziehungen in die Ontologie, ein Anpassen der Ontologie sowie das Einpflegen und Anpassen das oder die Regelwerke betreffender Regeln mittels mit der zentralen Instanz in einem Netzwerk vernetzter Endgeräte oder vernetzbarer mobiler Endgeräte ermöglicht wird.

6. Verfahren nach Anspruch 5, **dadurch gekennzeichnet, dass** dem mindestens einen Nutzer die Pflege des oder der Regelwerke durch Ausgabe eines durch den mindestens einen Nutzer zu bestätigenden oder abzulehnenden Vorschlags oder durch das Ignorieren für ihn aufgrund einer erkannten Situation oder eines erkannten Szenarios ausgegebener Informationen ermöglicht wird.

7. Verfahren nach Anspruch 6, **dadurch gekennzeichnet, dass** die Anpassung des Regelwerks oder der Regelwerke durch die zentrale Instanz mit Hilfe einer Fuzzy-Logik erfolgt.

8. Verfahren nach einem der Ansprüche 1 bis 7, **dadurch gekennzeichnet, dass** durch die zentrale Instanz zur Erkennung einer Situationsveränderung und/oder zur Vorhersage eines möglichen Szenarios optische Informationen mindestens einer der Kategorien ausgewertet werden
a.) Fotos von Subjekten oder Objekten in der häuslichen Umgebung,
b.) ein mittels einer Kamera erzeugter, Subjekte oder Objekte in der häuslichen Umgebung erfassender Videostream.

9. Verfahren nach einem der Ansprüche 1 bis 8, **dadurch gekennzeichnet, dass** durch die zentrale Instanz zur Erkennung einer Situationsveränderung und/oder zur Vorhersage eines möglichen Szenarios akustische Informationen ausgewertet werden.

10. Verfahren nach einem der Ansprüche 1 bis 9, **dadurch gekennzeichnet, dass** durch die zentrale Instanz zur Erkennung einer Situationsveränderung und/oder zur Vorhersage eines möglichen Szenarios Informationen von Bewegungssensoren ausgewertet werden.

11. System zur Unterstützung von Nutzern in einer intelligenten häuslichen Umgebung mit
- einer mindestens eine Steuer- und Verarbeitungseinrichtung (1) und Speichermittel (2) umfassenden, Komponenten des Systems miteinander verknüpfenden zentralen Instanz,
- mindestens einer Nutzerschnittstelle (3),
- Mitteln zur Bereitstellung von Informationen zu Subjekten und Objekten in der häuslichen Umgebung
- mindestens einem Aktor (7) zur Steuerung einer Komponente einer automatisierten Haustechnik,
- Mitteln (8) zur Ausgabe mindestens einer Ausgabeinformation für wenigstens
einen Nutzer der intelligenten häuslichen Umgebung,
**dadurch gekennzeichnet, dass**
a.) die Mittel zur Bereitstellung von Informationen Mittel wenigstens einer der Kategorien umfassen
i Sensoren (4, 4'), welche mindesten eine Zustandsinformation bereitstellen,
ii Identifikatoren (5, 5'), welche mindestens eine Identifikationsinformation zu einem Subjekt oder zu einem Objekt in der häuslichen Umgebung bereitstellen,
iii elektronische Informationsquellen (6), welche mindestens eine Eingangsinformation über und/oder für den mindestens einen Nutzer bereitstellen, die verschieden von der mindestens einen Ausgabeinformation ist,
b.) das System ferner umfasst
- eine in den Speichermitteln (2) gehaltene Ontologie, in welcher die Komponenten des Systems und alle durch die zentrale Instanz mittels mindestens einer dafür ausgebildeten Komponente des Systems innerhalb der häuslichen Umgebung identifizierbaren Subjekte und Objekte sowie deren Attribute und die zwischen ihnen bestehenden Beziehungen von der zentralen Instanz verwaltet werden,
- mindestens ein in den Speichermitteln (2) gehaltenes Regelwerk mit Regeln zur Situationserkennung und zur Ableitung von Steuersignalen für Komponenten der automatisierten Haustechnik und/oder mindestens einer Ausgabeinformation für den wenigstens einen Nutzer der intelligenten häuslichen Umgebung entsprechend einer erkannten Situation,
- einen Ontologie-Manager (11) und eine Einheit (12) zur Situationserkennung als Bestandteile der Steuer- und Verarbeitungseinrichtung oder unmittelbar mit ihr verbunden.

12. System nach Anspruch 11, **dadurch gekennzeichnet, dass** dieses mindestens ein in den Speichermitteln (2) gehaltenes Regelwerk mit Regeln sowie eine zur Steuer- und Verarbeitungseinheit gehörende oder unmittelbar mit ihr verbundene Einheit (13) zur Vorhersage sich an eine erkannte Situation entsprechend einem möglichen Szenario anschließender Situationen umfasst.

13. System nach Anspruch 11 oder 12, **dadurch gekennzeichnet, dass** es sich bei den Identifikatoren (5, 5') um an Objekten der häuslichen Umgebung und an oder in Komponenten des Systems angeordnete, mittels einer Komponente des Systems auslesbare Tags handelt.

14. System nach Anspruch 13, **dadurch gekennzeichnet, dass** es sich bei den Tags um mittels einer Komponente des Systems auslesbare RFID-Transponder handelt.

15. System nach einem der Ansprüche 11 bis 14, **dadurch gekennzeichnet, dass** dieses mindestens einen als eine Kamera ausgebildeten optischen Sensor umfasst, wobei die Steuer- und Verarbeitungseinrichtung (1) hard- und softwaremäßig für eine Subjekt- oder Objektserkennung eingerichtet ist, und/oder dass dieses mindestens einen als ein Mikrofon ausgebildeten akustischen Sensor umfasst, wobei die Steuer- und Verarbeitungseinrichtung (1) hard- und softwaremäßig zur Geräuscherkennung ausgebildet ist.
